(19) Europäisches Patentamt
European Patent Office
Office européen des brevets

(11) **EP 4 526 088 B1**

(12) **EUROPEAN PATENT SPECIFICATION**

(45) Date of publication and mention
of the grant of the patent:
**25.02.2026  Bulletin 2026/09**

(21) Application number: **22731071.1**

(22) Date of filing: **17.05.2022**

(51) International Patent Classification (IPC):
***B25J 9/16*** **(2006.01)**

(52) Cooperative Patent Classification (CPC):
**B25J 9/1641; B25J 9/1653;** G05B 2219/39035;
G05B 2219/39191; G05B 2219/41122;
G05B 2219/49197; G05B 2219/49292

(86) International application number:
**PCT/EP2022/063354**

(87) International publication number:
**WO 2023/222207 (23.11.2023 Gazette 2023/47)**

(54) **REDUCING KINEMATIC ERROR**

VERMINDERUNG KINEMATISCHER FEHLER

RÉDUCTION D'ERREUR CINÉMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.03.2025  Bulletin 2025/13**

(73) Proprietor: **ABB Schweiz AG
5400 Baden (CH)**

(72) Inventors:
• **WAHRBURG, Arne
64331 Weiterstadt (DE)**
• **ROBERTS, Richard
82205 Gilching (DE)**
• **MOBERG, Stig
72219 Västerås (SE)**
• **ENAYATI, Nima
68169 Mannheim (DE)**

(74) Representative: **Maiwald GmbH
Engineering
Elisenhof
Elisenstrasse 3
80335 München (DE)**

(56) References cited:
JP-A- 2015 006 705      US-A1- 2020 180 153
US-A1- 2020 180 154      US-A1- 2021 146 536

**Description**

The present invention relates to methods and apparatus for reducing kinematic error, in particular for reducing kinematic error when controlling the movement of a joint in an articulated robot arm.

An articulated robot arm comprises a plurality of links, which are coupled to each other, to a base or to an end effector by rotatable joints. Rotation of such a joint is driven by a motor, typically via a transmission gear. Play and inaccuracy in the manufacture of the motors and gears affects the accuracy with which the position and the speed of an end effector at the distal end of the robot arm can be controlled. Harmonic drive gears are widely used as transmission gear in robots, since they are practically backlash-free and achieve high reduction ratios. However, inevitable inaccuracies, such as eccentricity of a gearwheel or spline, would still cause the rotation speed of a joint to fluctuate even if its motor could be driven at a perfectly constant speed, so that the position of the joint can deviate from what one would expect based on knowing the position of the motor and the reduction ratio of the gear. This deviation is commonly referred to as kinematic error or transmission error.

JP 2015 006705 A describes how to solve a problem of generation of an error in response to a time difference between information acquired by an external sensor and that acquired by an internal sensor in a case of constructing a mathematical model for angle transmission error compensation of a speed reducer.

US 2020/180153 A1 describes speed reducer angular transmission error identification system including a variation data acquisition unit that acquires first variation data indicating a periodic variation of an operation of a second joint caused by a first motor's angular transmission error when a first joint control unit rotates a first motor's output shaft in a first direction at a constant first target speed and a second joint drive unit rotates an output shaft of a second motor at a constant second target speed, second variation which is data indicating a periodic variation of an operation of second joint caused by the first motor's angular transmission error when the first joint control unit rotates the first motor's output shaft in a second direction at the constant first target speed and the second joint control unit rotates the second motor's output shaft at the constant second target speed.

The objective of the present invention is to provide a simple and cost-efficient way of assessing and compensating kinematic error in a robot joint.

The present invention is defined by the subject-matter of the independent claims. Additional features of the invention are presented in the dependent claims.

According to an aspect of the present invention, this objective is achieved by a method for assessing kinematic error in a joint which rotatably connects a proximal portion and a distal portion of a robot arm, the robot joint having associated with it a motor mounted in one of said portions and coupled to the other one of said portions for driving rotation of the joint by a transmission gear, and a sensor for measuring the rotation of the joint, the method comprising the steps of:

> a) determining a movement of the robot arm in which the joint, while being rotated from a start angle to an end angle, is subject to a constant gravity-induced torque;
> b) controlling execution of said movement, and, in said movement, controlling the joint to rotate from the start angle to the end angle at a constant speed,
> c) detecting speed fluctuations of the joint while it is being rotated from the start angle to the end angle; and
> d) estimating the kinematic error based on the speed fluctuations.

The joint referred to above is a first joint and the robot arm comprises at least one second joint.

The movement is chosen so that at least while rotating the first joint from the start angle to the end angle the first and second joints have parallel axes of rotation, and a rotation speed of the second joint is matched to that of the first joint so that the gravity-induced torque to which the first joint is subjected is constant. When the second joint is in the proximal portion, the rotation of the second joint is identical in speed but opposite in direction to the rotation of the first joint. Alternatively, when the second joint is in the distal portion, the rotation of the second joint is opposite in direction to the rotation of the first joint, and the speed of rotation of the second joint is controlled so as to maintain constant a lateral offset between the centre of gravity of the distal portion and the axis of the first joint.

By keeping the gravity-induced torque constant, it can be ensured that speed fluctuations are indeed due to imperfections of the gear, or, at least, are not biased by gravity-induced deformation of the robot arm.

Fluctuations may be due to imperfections on the motor side of the transmission gear or on its arm side. When the reduction ratio of the transmission gear is high enough to require several revolutions of the motor for rotating the joint from the start angle to the end angle, the effect of a motor-side imperfection can be observed repeatedly while executing the movement, so that the influence of noise on the estimated kinematic error can be reduced.

While steps b) and c) are preferably carried out by a dedicated electronic controller, this doesn't have to be so for step a). In fact, in most practical cases an appropriate movement can be determined without elaborate optimization.

Preferably, the axes of rotation are horizontal.

Since when the second joint is in the distal portion, the range of angles in which the first joint can be rotated while holding said lateral displacement constant is limited, it can be expedient to carry out step c) at least twice, under different lateral displacements and to base the estimation of step d) on data collected in said multiple steps c).

The speed of rotation should be low enough for torque induced by centrifugal and Coriolis forces to be small compared to gravity induced torque, preferably less than 10% or less than 5% of the gravity induced torque.

According to another aspect of the invention, the object is achieved by a robotic system comprising

- a robot arm having a proximal portion, a distal portion, a joint connecting said proximal and distal portions, a motor mounted in one of said portions, a transmission gear connecting the motor to the other one of said portions for driving rotation of the joint,
- a controller for controlling the robot arm to carry out a predetermined movement, wherein the controller is adapted to carry out at least steps b), c) and d) of the method described above.

The controller comprises a trajectory generator being adapted for outputting, based on a predetermined trajectory which maps successive instants in time onto associated desired rotation angles of the joint or its associated motor, at a given instant in time, a position command specifying the desired rotation angle associated with said given instant, and a position controller being adapted for adjusting a rotation angle of the joint or the motor to the position command received.

The joint is a first joint and the robot arm comprises at least one second joint.

The first and second joints have parallel axes of rotation at least while rotating the first joint from the start angle to the end angle, and the controller is adapted to match a rotation speed of the second joint to that of the first joint so that the gravity-induced torque to which the first joint is subjected is constant. When the second joint is in the proximal portion, the controller is adapted to rotate the second joint at the same speed but opposite in direction to the rotation of the first joint.

Alternatively, when the second joint is in the distal portion, the controller is adapted to rotate the second joint in opposite direction to the rotation of the first joint, and to control the speed of rotation of the second joint so as to maintain constant a lateral offset between the centre of gravity of the distal portion and the axis of the first joint.

Finally, the object is achieved by a computer software product comprising a plurality of instructions which, when executed by the controller of the robotic system, cause the controller to carry out at least steps b), c) and d) of the above method. The movement is chosen so that at least while rotating the first joint from the start angle to the end angle the first and second joints have parallel axes of rotation, and a rotation speed of the second joint is matched to that of the first joint so that the gravity-induced torque to which the first joint is subjected is constant.

When the second joint is in the proximal portion, the rotation of the second joint is identical in speed but opposite in direction to the rotation of the first joint. Alternatively, when the second joint is in the distal portion, the rotation of the second joint is opposite in direction to the rotation of the first joint, and the speed of rotation of the second joint is controlled so as to maintain constant a lateral offset between the centre of gravity of the distal portion and the axis of the first joint.

Further features and advantages of the invention will become apparent from the subsequent description of embodiments, referring to the appended drawings.

Fig. 1      is a block diagram of a robotic system implementing the invention;

Fig. 2      is a perspective view of the robot arm of the system of Fig. 1;

Fig. 3      illustrates steps of a movement for measuring the kinematic error of a first joint of the robot arm of Fig. 2;

Fig. 4      illustrates steps of a movement for measuring the kinematic error of a second joint of the robot arm of Fig. 2 in a first angle range;

Fig. 5      illustrates steps of a movement for measuring the kinematic error of the second joint in a second angle range; and

Fig. 6      illustrates a pose of the robot for measuring the kinematic error of the third and fourth joints not covered by the claims.

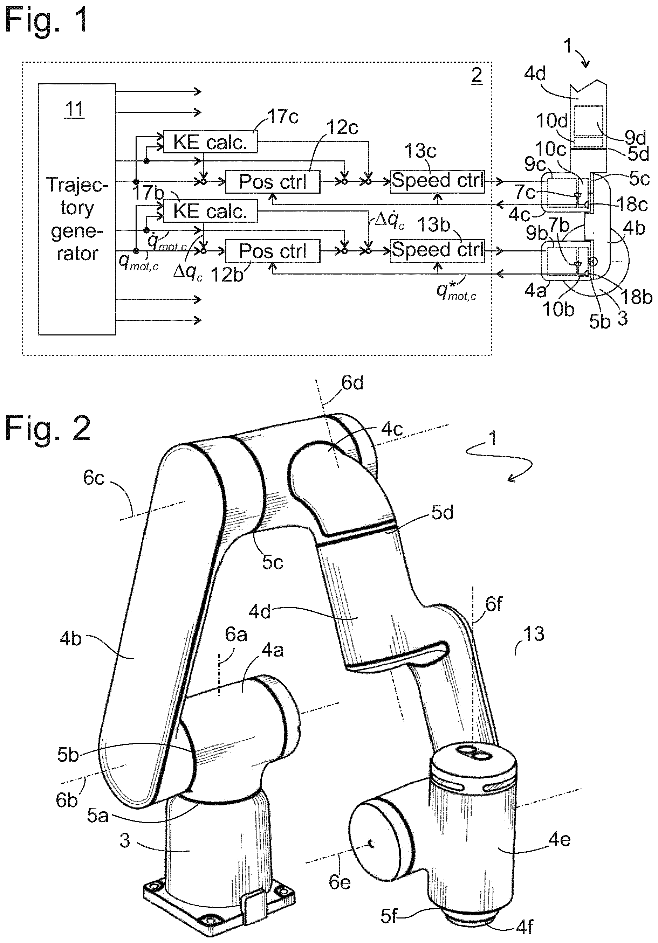

Fig. 1 is a schematic view of a robot system comprising an articulated robot arm 1 and a controller 2. The robot arm 1, shown in more detail in Fig. 2, has a stationary base 3 fixed to a support, and a plurality of links 4a-4f rotatably connected to each other and to the base 2 by joints 5a-5f. The joint 5e connecting links 4d, 4e is concealed behind link 4e. Each joint $5i$, i=a,...,f enables a rotation of the link $4i$ on its distal side by an axis $6i$. The most distal link $4i$ is a holder for a replaceable tool, not shown. Axis 6a is vertical, axes 6b and 6c are horizontal; the orientations of the other axes vary. Each joint $5i$ has a motor associated with it for driving its rotation; the motor can be provided in a member on the proximal side of the joint and be connected to a member on the distal side thereof, or vice versa. In the robot arm of Fig. 2, joints 5a, 5b, 5f have their motors in members on their proximal side, i.e. base 3 and links 4a, 4e, respectively; joints 4c, 4d and 4e have the motors on their distal side, in links 4c, 4d and 4e, respectively.

Motors 9b, 9c, 9d associated with joints 5b, 5c, 5d and transmission gears 10b, 10c, 10d connecting these motors to links 4b, 4b and 4c, respectively, are shown in Fig. 1.

Typically, the transmission gear 10j is a harmonic gear in which a wave generator is rigidly coupled to an output shaft of motor 9j, and pressing teeth of a flexspline into local engagement with a circular spline surrounding it. When the number of teeth of the circular spline $i_C$ is and that of the flexspline $i_f$ is, the reduction ratio of the gear 10j is $R_j = \dfrac{i_f - i_C}{i_f}$. Since the flexspline is rotating in a direction opposite to that of the wave generator, points of the two currently in contact will meet again after the wave generator has rotated by $2\pi \dfrac{i_f}{i_C}$. The controller 2 comprises a trajectory generator 11 and, associated with each joint 4j, j=a, b, ...f, a position controller and a speed controller, of which only position controllers 12b, 12c, and speed controllers 13b and 13c are shown. A trajectory specifies, as a function of time, coordinates a reference point of the robot arm, usually referred to as the tool center point TCP is to have at specified times in the course of a movement the robot is to reproduce. The trajectory generator 11 stores such a trajectory and, when triggered to reproduce it, outputs, at each instant t in time, angle commands to the position controllers 12j that specify an angle $q_{arm,j}^{target}$ which, according to the trajectory, should be assumed by their associated joint 5j at that instant.

Each position controller 12j is connected to a feedback line which conveys a signal representative of the current position or rotation speed of its associated joint 4j. The signal can originate from different sources. Conventionally, and as shown in Fig. 1, the source is an angle sensor 7j, e.g. a resolver, which is associated with an output shaft of motor 9j driving transmission gear 10j, and detects a rotation angle $q_{mot,j}$, of the output shaft.

The position controller 12j produces an output signal which is a sum of terms proportional to the difference between a desired current position $q_{mot,j}^{target}$ of the motor derived from the joint target angle $q_{arm,j}^{target}$ specified by the trajectory generator 11 under the assumption that both are strictly proportional and the actual current motor position $q_{mot,j}^{*}$ derived from the signal of feedback line 14b, 14c. The output signal might be used directly for controlling input power to the motor 9a, 9b; in the case of Fig. 1 it is input to speed controller 13b, 13c which compares it to a current joint speed derived from the signal of sensor 7b, 7c, and controls motor input power based on the difference so that when the desired current position $q_{arm,j}^{target}(t)$ specified by the trajectory generator 11 changes at a constant rate with time t, the position $q_{mot,j}$ of the motor output shaft does so, too.

If the reduction ratio $R_j$ of the transmission gear 10j was independent of the motor angle, a current joint angle $q_{arm,j}^{*}$ of joint 5j could be calculated from a measured value $q_{mot,j}^{*}$ of the motor angle using $q_{arm,j}^{*} = R_j q_{mot,j}^{*} + q_0$ ($q_0$ being a constant phase angle) with higher precision than it could be measured directly at the joint 5j itself. In fact, imperfections of the reduction gear 10j cause the reduction ratio $R_j$ to vary slightly as a function of $q_{mot,j}$.

Another angle sensor 18j is associated with an output shaft of the transmission gear 10j, so as to obtain measured values $q_{arm,j}^{*}$, of the joint angle directly and without any transmission gear in between.

The variation of the reduction ratio $i_j$ is detected from outputs of the sensors 7j, 18j by forming the difference, also referred to as kinematic error, $\Delta q_j(q_{mot,j}) = q_{arm,j}^{*} - (R_j q_{mot,j} + q_0)$, where $q_{arm,j}^{*}$ is measured at the same time as $q_{mot,j}$ is output. Alternatively, the variation might be derived from a time shift between the instant in which the joint angle, calculated from the motor angle $q_{arm,j} = R_j q_{mot,j} + q_0$ as reaches a given value and the instant in which this value is actually measured.

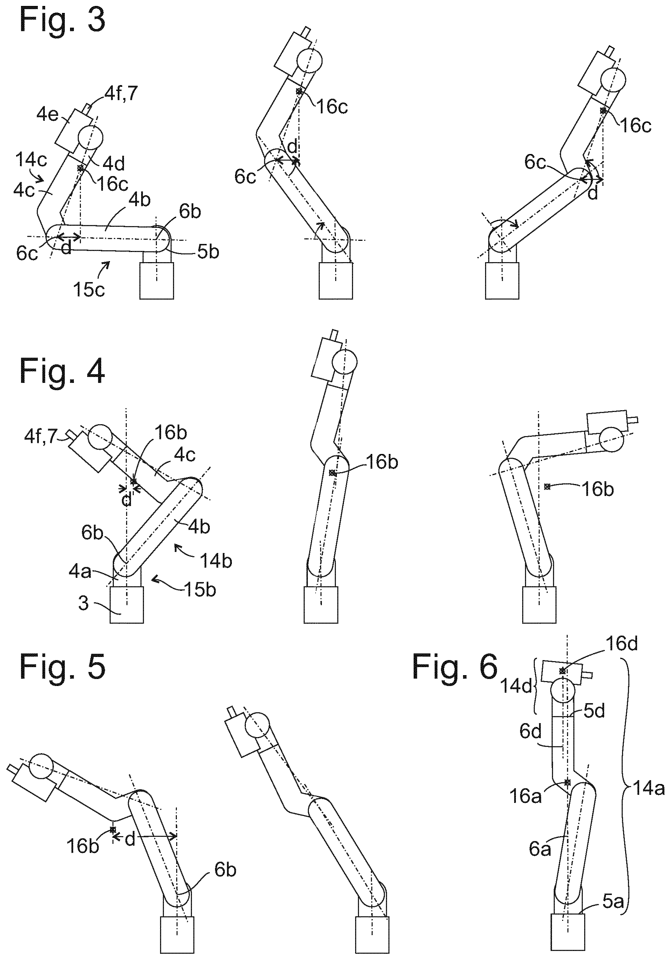

Fig. 3 shows poses adopted by the robot arm 1 in the course of a trajectory used for assessing the kinematic error of joint 5c. With respect to this joint 5c, members 4c, 4d, 4e, 4f form a distal portion 14c, whereas elements 3, 4a and 4b form a proximal portion 15c of robot arm 1. In the trajectory of Fig.3, link 4b is rotated clockwise around axis 6b, whereas the distal portion 14c is rotated counterclockwise around axis 6c by the same angle. Both 5axes 6b, 6c are parallel, so that with respect to a coordinate system in which the base 3 is stationary, the distal portion 14c is displaced along a circular path but does not rotate. Thus, a lateral offset d between axis 6c and the centre of gravity 16c of distal portion 14c remains constant through the entire trajectory, and so does the torque to which joint 4c is subjected while the distal portion 14c is being rotated. All other joints 4a, 4d-f do not rotate throughout the trajectory.

When motor 9c is controlled to rotate at a constant speed $\dot{q}_{mot,C}$, too, all spectral components of the kinematic error $\Delta q_C$ at frequencies higher than the fundamental frequency of rotation of the joints 5b, 5c can be regarded as due to speed variations resulting from imperfections of transmission gear 10c.

The kinematic error is approximated by a sum of harmonic functions

$$\Delta q_C = \sum_{i=1}^{M} A_{i,C} \sin\left(k_{i,C} q_{mot,j} + \vartheta_{i,C}\right) \qquad (1a)$$

or

$$\Delta q_C = \sum_{i=1}^{M} B_{i,C} \sin\left(k_{i,C} q_{mot,j} + C_{i,C} \cos\left(k_{i,C} q_{mot,j}\right)\right) \qquad (1b)$$

wherein is either an integer or an integer multiple of $\frac{i_f}{i_C}$.

While controller 2 moves the robot arm 1 as described above, it collects measurements of $\Delta_{i,C}(q_{mot,C})$, and numerically fits the adjustable parameters $A_{i,C} \vartheta_{i,C}$ or $B_{i,C} C_{i,C}$ in eq (1a) or (1b) to these measurements. Typically, the most important contributions to the sums of eq (1a) or (1b) are for $k_1 = 2\frac{i_f}{i_C}$ and. In practice, it may therefore be sufficient to perform the fit for these two components alone, or, possibly, one or two more more components at higher frequencies $k_3$ or $k_4$.

The adjustable parameters thus obtained are written into a kinematic error (KE) calculator 17c, enabling it determine, for any target angle output by trajectory generator 11, the corresponding kinematic error and its time derivative. By superimposing these upon the commands from the trajectory generator, the kinematic error is largely compensated, and the precision with which the displacement of the robot arm 1 is controlled can be improved considerably.

Fig. 4 shows poses adopted by the robot arm 1 in the course of a trajectory used for assessing the kinematic error of joint 5b. In this trajectory, link 4b is rotated counterclockwise around axis 6b. Proximal portion 15b is comprises only base 3 and link 4a, links 4b to 4f form distal portion 14b. The centre of gravity 16b of distal portion 14b has a small lateral offset d from axis 6b. In order to hold the torque acting on joint 5c constant, the displacement d must be constant while link 4b is rotated. This is achieved by rotating link 4c and all other more distal links clockwise around axis 6c.

As described above, while the robot arm 1 is moved along the trajectory, the controller collects kinematic error data $\Delta q_b(q_{mot,b})$ from sensors 7b, 18b in order to assess the kinematic error of joint 5b.

While in the trajectory of Fig.3, joint 5c can rotate by 180° or even more while holding constant the gravity-induced torque applied by distal portion 14c, the angle by which joint 5b can rotate under constant torque from distal portion 14b is much smaller, approximately 60°, and covers only a fraction of the range in which the joint 5b is actually free to rotate. In order to assess the kinematic error for a wider range of angles, the robot arm 1 can assume poses as shown in Fig. 5: in the left-hand one of these the orientation of link 4b is similar to that in the right-hand pose of Fig. 4; links 4c-4f have been rotated to the left, placing the centre of gravity 16b to the left of axis 6b. Link 4b can now continue to rotate counterclockwise, and links 4c-4f can again rotate clockwise, as shown in the right-hand pose of Fig. 5, again keeping the offset d constant, although at a value different from that of Fig. 4.

It should be noted that the transmission gear 10b, 10c, ... associated with each joint 5a-f of the robot arm 1 has a transmission ratio high enough so that while in the course of a trajectory the joint rotates through an angle range in which the gravity-induced torque acting on it can be held constant, the motor which drives the joint can carry out several complete revolutions. Any imperfections of the motor or of an input side of the transmission gear will take effect on the kinematic error at least once per revolution. So, while the robot arm is moving along the trajectory, the effect of such an imperfection can be observed several times, so that its frequency, phase and amplitude can be determined precisely.

Fig. 6 illustrates a pose of the robot arm 1 in which the centre of gravity 16a of a distal portion comprising links 4a-f of a distal portion comprising links 4d-f is located on axis 6a. In this pose, the joint 5a can be rotated as far as desired, performing a complete revolution or even multiple revolutions. Since the gravity-induced torque acting on the joint 5a is constantly zero, any variations of the acceleration measured by sensor 7 while rotating around axis 6a can be attributed to imperfections of the transmission gear 10a or its associate motor 9a, and can be used as described above for assessing the kinematic error of joint 5a.

Further, axis 6d of joint 5d is vertically oriented, and the centre of gravity 16a of a distal portion comprising links 4d-f is located on it, so that in analogy to joint 5a, joint 5d can be rotated and its kinematic error assessed in this pose.

Reference numerals

| 1 | robot arm |
| 2 | controller |
| 3 | base |
| 4 | link |

5    joint
6    axis
7    sensor
8    end effector
9    motor
10    transmission gear
11    trajectory generator
12    position controller
13    speed controller
14    distal portion
15    proximal portion
16    centre of gravity
17    KE calculator
18    sensor

**Claims**

1. A method for assessing kinematic error in a joint (5a, 5b, 5c, 5d) which rotatably connects a proximal portion (15b, 15c) and a distal portion (14b, 14c) of a robot arm (1), the joint (5a, 5b, 5c, 5d) having associated with it a motor (9b, 9c, 9d) mounted in one of said portions (14b, 14c; 15b, 15c) and coupled to the other one (15c, 15b; 14b, 14c) of said portions for driving rotation of the joint (5a, 5b, 5c, 5d) by a transmission gear (10b, 10c, 10d) having a reduction ratio, and a sensor (18b, 18c) for measuring the rotation of the joint (5a, 5b, 5c, 5d), comprising the steps of:

   a) determining a movement of the robot arm (1) in which the joint (5a, 5b, 5c, 5d), while being rotated from a start angle to an end angle, is subject to a constant gravity-induced torque;
   b) controlling execution of said movement, and, in said movement, controlling the joint (5a, 5b, 5c, 5d) to rotate from the start angle to the end angle at a constant speed,
   c) detecting speed fluctuations of the joint (5a, 5b, 5c, 5d) while it is being rotated from the start angle to the end angle; and
   d) estimating the kinematic error based on the speed fluctuations;
   **characterized in that** the joint (5b; 5c) is a first joint and the robot arm (1) comprises at least one second joint (5c; 5b);
   wherein the movement is chosen so that at least while rotating the first joint (5b; 5c) from the start angle to the end angle the first and second joints (5b, 5c) have parallel axes of rotation (6b, 6c), and a rotation speed of the second joint (5c; 5b) is matched to that of the first joint (5b; 5c) so that the gravity-induced torque to which the first joint (5b; 5c) is subjected is constant,
   wherein the second joint (5b) is in the proximal portion (15c), and the rotation of the second joint (5b) is identical in speed but opposite in direction to the rotation of the first joint (5c); or wherein the second joint (5c) is in the distal portion (14b), the rotation of the second joint (5c) is opposite in direction to the rotation of the first joint (5b), and the speed of rotation of the second joint (5c) is controlled so as to maintain constant a lateral offset (d) between the centre of gravity (16b) of the distal portion (14b) and the axis (6b) of the first joint (5b).

2. The method of claim 1, wherein the sensor (18b, 18c) is an angle sensor associated with an output shaft of the transmission gear (10b, 10c, 10d).

3. The method of claim 1 or 2, wherein detecting a speed fluctuation comprises determining an angle of an output shaft of the motor, calculating therefrom an expected angle of the joint using the reduction ratio of the transmission gear (10b, 10c, 10d), and determining a difference between the expected angle and an angle measured by said sensor (18b, 18c).

4. The method of any of claims 1 to 3, wherein the reduction ratio of the transmission gear is high enough to require several revolutions of the motor for rotating the joint from the start angle to the end angle.

5. The method of any of claims 1 to 4, wherein the axes of rotation (6b, 6c) are horizontal.

6. A robotic system comprising

   - a robot arm (1) having a proximal portion (15a, 15b, 15c, 15d), a distal portion (14a, 14b, 14c, 14d), a joint (5a, 5b, 5c, 5d) connecting said proximal and distal portions (15a, ..., 14d), a motor (9a, 9b, 9c, ...) mounted in one of said portions (15a, ...,14d), a transmission gear (10a, 10b, 10c, ...) connecting the motor (9a, 9b, 9c, ...) to the other one of said portions (15a, ...,14d) for driving a rotation of the joint (5a, 5b, 5c, 5d),

- a controller (2) for controlling the robot arm (1) to carry out a pre-determined movement, wherein the controller is adapted to carry out at least steps b), c) and d) of the method according to any of the preceding claims;

wherein the controller (2) comprises a trajectory generator (11) being adapted for outputting, based on a predetermined trajectory which maps successive instants in time onto associated desired rotation angles of the joint (5a, 5b, 5c,5d) or its associated motor (10a, 10b, 10c, ...), at a given instant in time, a position command specifying the desired rotation angle associated with said given instant, and a position controller (12b, 12c) being adapted for adjusting a rotation angle of the joint (5a, 5b, 5c, 5d) or the motor (10a, 10b, 10c, ...) to the position command received,

**characterized in that** the joint (5b; 5c) is a first joint and the robot arm (1) comprises at least one second joint (5c; 5b);

wherein the first and second joints (5b, 5c) have parallel axes of rotation (6b, 6c) at least while rotating the first joint (5b; 5c) from the start angle to the end angle, and the controller (2) is adapted to match a rotation speed of the second joint (5c; 5b) to that of the first joint (5b; 5c) so that the gravity-induced torque to which the first joint (5b; 5c) is subjected is constant,

wherein the second joint (5b) is in the proximal portion (15c) and the controller (2) is adapted to rotate the second joint (5b) at the same speed but opposite in direction to the rotation of the first joint (5c); or

wherein the second joint (5c) is in the distal portion (14b) and the controller (2) is adapted to rotate the second joint (5c) in opposite direction to the rotation of the first joint (5b), and to control the speed of rotation of the second joint (5c) so as to maintain constant a lateral offset (d) between the centre of gravity (16b) of the distal portion (14b) and the axis (6b) of the first joint (5b).

7. The robotic system of claim 6, wherein the sensor (18b, 18c) is an angle sensor associated with an output shaft of the transmission gear (10b, 10c, 10d).

8. A computer software product comprising a plurality of instructions which, when executed by the controller (2) of the robotic system

of claim 6, cause the controller to carry out at least steps b), c) and d) of the method according to any of claims 1 to 5, wherein the movement is chosen so that at least while rotating the first joint (5b; 5c) from the start angle to the end angle the first and second joints (5b, 5c) have parallel axes of rotation (6b, 6c), and a rotation speed of the second joint (5c; 5b) is matched to that of the first joint (5b; 5c) so that the gravity-induced torque to which the first joint (5b; 5c) is subjected is constant,

wherein the second joint (5b) is in the proximal portion (15c), and the rotation of the second joint (5b) is identical in speed but opposite in direction to the rotation of the first joint (5c); or wherein the second joint (5c) is in the distal portion (14b), the rotation of the second joint (5c) is opposite in direction to the rotation of the first joint (5b), and the speed of rotation of the second joint (5c) is controlled so as to maintain constant a lateral offset (d) between the centre of gravity (16b) of the distal portion (14b) and the axis (6b) of the first joint (5b).

**Patentansprüche**

1. Verfahren zur Bewertung des kinematischen Fehlers in einem Gelenk (5a, 5b, 5c, 5d), das einen proximalen Bereich (15b, 15c) und einen distalen Bereich (14b, 14c) eines Roboterarms (1) drehbar verbindet, wobei das Gelenk (5a, 5b, 5c, 5d) einen Motor (9b, 9c, 9d) aufweist, der in einem der Bereiche (14b, 14c; 15b, 15c) montiert und mit dem anderen Bereich (15c, 15b; 14b, 14c) gekoppelt ist, um die Drehung des Gelenks (5a, 5b, 5c, 5d) durch ein Getriebe (10b, 10c, 10d) aufweisend ein Untersetzungsverhältnis und einen Sensor (18b, 18c) zum Messen der Drehung des Gelenks (5a, 5b, 5c, 5d) umfasst, mit den folgenden Schritten:

a) Bestimmen einer Bewegung des Roboterarms (1), bei der das Gelenk (5a, 5b, 5c, 5d) während seiner Drehung von einem Startwinkel zu einem Endwinkel einem konstanten, durch die Schwerkraft verursachten Drehmoment ausgesetzt ist;

b) Steuern der Ausführung der Bewegung und, während der Bewegung, Steuern des Gelenks (5a, 5b, 5c, 5d), um sich mit konstanter Geschwindigkeit vom Startwinkel zum Endwinkel zu drehen,

c) Detektieren von Geschwindigkeitsschwankungen des Gelenks (5a, 5b, 5c, 5d), während es vom Startwinkel zum Endwinkel gedreht wird; und

d) Schätzen des kinematischen Fehlers basierend auf den Geschwindigkeitsschwankungen;
**dadurch gekennzeichnet, dass** das Gelenk (5b; 5c) ein erstes Gelenk ist und der Roboterarm (1) mindestens ein zweites Gelenk (5c; 5b) umfasst;

wobei die Bewegung so gewählt wird, dass zumindest während der Drehung des ersten Gelenks (5b; 5c) vom Startwinkel zum Endwinkel mindestens während der Drehung des ersten Gelenks (5b; 5c) vom Startwinkel zum Endwinkel das erste und das zweite Gelenk (5b, 5c) parallele Drehachsen (6b, 6c) aufweisen und eine Drehgeschwindigkeit des zweiten Gelenks (5c; 5b) an die des ersten Gelenks (5b; 5c) gematcht ist, so dass das durch die Schwerkraft induzierte Drehmoment, dem das erste Gelenk (5b; 5c) ausgesetzt ist, konstant ist,

wobei sich das zweite Gelenk (5b) im proximalen Bereich (15c) befindet und die Drehung des zweiten Gelenks (5b) in ihrer Geschwindigkeit identisch, aber in ihrer Richtung entgegengesetzt zur Drehung des ersten Gelenks (5c) ist; oder

wobei sich das zweite Gelenk (5c) im distalen Bereich (14b) befindet, wobei die Drehung des zweiten Gelenks (5c) entgegengesetzt zur Richtung der Drehung des ersten Gelenks (5b) ist und die Drehgeschwindigkeit des zweiten Gelenks (5c) so gesteuert wird, dass ein seitlicher Versatz (d) zwischen dem Schwerpunkt (16b) des distalen Bereichs (14b) und der Achse (6b) des ersten Gelenks (5b) konstant gehalten wird.

2.  Verfahren nach Anspruch 1, wobei der Sensor (18b, 18c) ein Winkelsensor ist, der mit einer Abtriebswelle des Getriebes (10b, 10c, 10d) assoziiert ist.

3.  Verfahren nach Anspruch 1 oder 2, wobei das Detektieren einer Geschwindigkeitsschwankung das Bestimmen eines Winkels einer Abtriebswelle des Motors, das Berechnen eines erwarteten Winkels des Gelenks unter Verwendung des Untersetzungsverhältnisses des Getriebes (10b, 10c, 10d) und das Bestimmen einer Differenz zwischen dem erwarteten Winkel und einem von dem Sensor (18b, 18c) gemessenen Winkel umfasst.

4.  Verfahren nach einem der Ansprüche 1 bis 3, wobei das Untersetzungsverhältnis des Getriebes so hoch ist, dass mehrere Umdrehungen des Motors erforderlich sind, um das Gelenk vom Startwinkel zum Endwinkel zu drehen.

5.  Verfahren nach einem der Ansprüche 1 bis 4, wobei die Drehachsen (6b, 6c) horizontal sind.

6.  Robotersystem, umfassend

- einen Roboterarm (1) mit einem proximalen Bereich (15a, 15b, 15c, 15d), einem distalen Bereich (14a, 14b, 14c, 14d), ein Gelenk (5a, 5b, 5c, 5d), das den proximalen und den distalen Bereich (15a, ..., 14d) verbindet, einen Motor (9a, 9b, 9c, ...), der in einem der Bereiche (15a, ..., 14d) montiert ist, ein Getriebe (10a, 10b, 10c, ...), das den Motor (9a, 9b, 9c, ...) mit dem anderen Bereich (15a, ..., 14d) verbindet, um eine Drehung des Gelenks (5a, 5b, 5c, 5d) anzutreiben,

- eine Steuereinheit (2) zum Steuern des Roboterarms (1), um eine bestimmte Bewegung auszuführen, wobei die Steuereinheit so eingerichtet ist, dass sie mindestens die Schritte b), c) und d) des Verfahrens entsprechend einem der vorangehenden Ansprüche ausführt;

wobei die Steuereinheit (2) einen Trajektoriengenerator (11) umfasst, der dazu eingerichtet ist, basierend auf einer vorbestimmten Trajektorie, die aufeinanderfolgende Zeitpunkte auf zugehörige gewünschte Drehwinkel des Gelenks (5a, 5b, 5c, 5d) oder seines assoziierten Motors (10a, 10b, 10c, ...) mappt, zu einem gegebenen Zeitpunkt einen Positionsbefehl auszugeben, der den mit dem gegebenen Zeitpunkt assoziierten gewünschten Drehwinkel angibt, und einen Positionsregler (12b, 12c) umfasst, der dazu eingerichtet ist, einen Drehwinkel des Gelenks (5a, 5b, 5c, 5d) oder des Motors (10a, 10b, 10c, ...) an den empfangenen Positionsbefehl anzupassen,

**dadurch gekennzeichnet, dass** das Gelenk (5b; 5c) ein erstes Gelenk ist und der Roboterarm (1) mindestens ein zweites Gelenk (5c; 5b) umfasst;

wobei das erste und zweite Gelenk (5b, 5c) zumindest während der Drehung des ersten Gelenks (5b; 5c) vom Startwinkel zum Endwinkel parallele Drehachsen (6b, 6c) aufweisen und die Steuerung (2) eingerichtet ist, eine Drehgeschwindigkeit des zweiten Gelenks (5c; 5b) an die des ersten Gelenks zu matchen (5b; 5c) so anzupassen, dass das durch die Schwerkraft induzierte Drehmoment, dem das erste Gelenk (5b; 5c) ausgesetzt ist, konstant ist,

wobei sich das zweite Gelenk (5b) im proximalen Bereich (15c) befindet und die Steuereinheit (2) so eingerichtet ist, dass sie das zweite Gelenk (5b) mit derselben Geschwindigkeit, aber in entgegengesetzter Richtung zur Drehung des ersten Gelenks (5c) dreht; oder

wobei sich das zweite Gelenk (5c) im distalen Bereich (14b) befindet und die Steuereinheit (2) so eingerichtet ist, dass sie das zweite Gelenk (5c) in entgegengesetzter Richtung zur Drehung des ersten Gelenks (5b) dreht und die Drehgeschwindigkeit des zweiten Gelenks (5c) so zu steuern, dass ein seitlicher Versatz (d) zwischen dem Schwerpunkt (16b) des distalen Bereichs (14b) und der Achse (6b) des ersten Gelenks (5b) konstant gehalten wird.

**7.** Robotersystem nach Anspruch 6, wobei der Sensor (18b, 18c) ein Winkelsensor ist, der mit einer Abtriebswelle des Getriebes (10b, 10c, 10d) assoziiert ist.

**8.** Ein Computersoftwareprodukt, das eine Vielzahl von Instruktionen umfasst, die, wenn sie von der Steuerung (29) des Robotersystems entsprechend Anspruch 6 ausgeführt werden, die Steuerung veranlassen, mindestens die Schritte b), c) und d) des Verfahrens entsprechend einem der Ansprüche 1 bis 5 auszuführen, wobei die Bewegung so gewählt ist, dass zumindest während der Drehung des ersten Gelenks (5b; 5c) vom Startwinkel zum Endwinkel mindestens die ersten und zweiten Gelenke (5b, 5c) parallele Drehachsen (6b, 6c) aufweisen und eine Drehgeschwindigkeit des zweiten Gelenks (5c; 5b) an die des ersten Gelenks (5b; 5c) gematcht ist, so dass das durch die Schwerkraft induzierte Drehmoment, dem das erste Gelenk (5b; 5c) ausgesetzt ist, konstant ist,

wobei sich das zweite Gelenk (5b) im proximalen Bereich (15c) befindet und die Drehung des zweiten Gelenks (5b) in ihrer Geschwindigkeit identisch, aber in ihrer Richtung entgegengesetzt zur Drehung des ersten Gelenks (5c) ist; oder

wobei sich das zweite Gelenk (5c) im distalen Bereich (14b) befindet, wobei die Drehung des zweiten Gelenks (5c) entgegengesetzt zur Richtung der Drehung des ersten Gelenks (5b) ist und die Drehgeschwindigkeit des zweiten Gelenks (5c) so gesteuert wird, dass ein seitlicher Versatz (d) zwischen dem Schwerpunkt (16b) des distalen Bereichs (14b) und der Achse (6b) des ersten Gelenks (5b) konstant gehalten wird.

## Revendications

**1.** Procédé d'évaluation d'une erreur cinématique dans une articulation (5a, 5b, 5c, 5d) reliant de manière rotative une partie proximale (15b, 15c) et une partie distale (14b, 14c) d'un bras robotisé (1), l'articulation (5a, 5b, 5c, 5d) ayant un moteur (9b, 9c, 9d) qui lui est associé, monté dans une desdites parties (14b, 14c ; 15b, 15c) et couplé à l'autre (15c, 15b ; 14b, 14c) desdites parties pour entraîner en rotation l'articulation (5a, 5b, 5c, 5d) par le biais d'un engrenage de transmission (10b, 10c, 10d) ayant un rapport de réduction, et un capteur (18b, 18c) pour mesurer la rotation de l'articulation (5a, 5b, 5c, 5d), comprenant les étapes suivantes :

a) la détermination d'un mouvement du bras robotisé (1) dans lequel l'articulation (5a, 5b, 5c, 5d), pendant sa rotation d'un angle de départ vers un angle final, est soumise à un couple constant induit par la gravité ;

b) la commande de l'exécution dudit mouvement et, pendant ledit mouvement, la commande de l'articulation (5a, 5b, 5c, 5d) pour qu'elle effectue une rotation de l'angle de départ vers l'angle final à une vitesse constante,

c) la détection de fluctuations de vitesse de l'articulation (5a, 5b, 5c, 5d) pendant sa rotation de l'angle de départ vers l'angle final ; et

d) l'estimation de l'erreur cinématique sur la base des fluctuations de vitesse ;

**caractérisé en ce que** l'articulation (5b ; 5c) est une première articulation et le bras robotisé (1) comprend au moins une seconde articulation (5c ; 5b) ;

dans lequel le mouvement est choisi de sorte qu'au moins pendant la rotation de la première articulation (5b ; 5c) de l'angle de départ vers l'angle final, les première et seconde articulations (5b, 5c) possèdent des axes de rotation parallèles (6b, 6c), et une vitesse de rotation de la seconde articulation (5c ; 5b) est adaptée à celle de la première articulation (5b ; 5c) de sorte que le couple induit par la gravité auquel la première articulation (5b ; 5c) est soumise reste constant,

dans lequel la seconde articulation (5b) se trouve dans la partie proximale (15c), et la rotation de la seconde articulation (5b) s'effectue à la même vitesse mais en sens opposé à la rotation de la première articulation (5c) ; ou

dans lequel la seconde articulation (5c) se trouve dans la partie distale (14b), la rotation de la seconde articulation (5c) est en sens opposé à la rotation de la première articulation (5b), et la vitesse de rotation de la seconde articulation (5c) est commandée de manière à maintenir constant un décalage latéral (d) entre le centre de gravité (16b) de la partie distale (14b) et l'axe (6b) de la première articulation (5b).

**2.** Procédé selon la revendication 1, dans lequel le capteur (18b, 18c) est un capteur d'angle associé à un arbre de sortie de l'engrenage de transmission (10b, 10c, 10d) .

**3.** Procédé selon la revendication 1 ou 2, dans lequel la détection d'une fluctuation de vitesse comprend la détermination d'un angle d'un arbre de sortie du moteur, le calcul à partir de celui-ci d'un angle attendu de l'articulation à l'aide du rapport de réduction de l'engrenage de transmission (10b, 10c, 10d), et la détermination d'une différence entre l'angle attendu et un angle mesuré par ledit capteur (18b, 18c).

4. Procédé selon l'une quelconque des revendications 1 à 3, dans lequel le rapport de réduction de l'engrenage de transmission est suffisamment élevé pour nécessiter plusieurs tours du moteur pour assurer la rotation de l'articulation de l'angle de départ vers l'angle final.

5. Procédé selon l'une quelconque des revendications 1 à 4, dans lequel les axes de rotation (6b, 6c) sont horizontaux.

6. Système robotique comprenant

- un bras robotisé (1) ayant une partie proximale (15a, 15b, 15c, 15d), une partie distale (14a, 14b, 14c, 14d), une articulation (5a, 5b, 5c, 5d) reliant lesdites parties proximale et distale (15a, ..., 14d), un moteur (9a, 9b, 9c, ...) monté dans une desdites parties (15a, ..., 14d), un engrenage de transmission (10a, 10b, 10c, ...) reliant le moteur (9a, 9b, 9c, ...) à l'autre desdites parties (15a, ..., 14d) pour entraîner en rotation l'articulation (5a, 5b, 5c, 5d),
- un contrôleur (2) pour commander le bras robotisé (1) pour qu'il effectue un mouvement prédéterminé, le contrôleur étant apte à mettre en œuvre au moins les étapes b), c) et d) du procédé selon l'une quelconque des revendications précédentes ;
le contrôleur (2) comprenant un générateur de trajectoire (11) apte à produire, sur la base d'une trajectoire prédéterminée qui met en correspondance des instants successifs avec des angles de rotation souhaités associés de l'articulation (5a, 5b, 5c, 5d) ou de son moteur (10a, 10b, 10c, ...) associé, à un instant donné, une commande de position spécifiant l'angle de rotation souhaité associé audit instant donné, et un contrôleur de position (12b, 12c) apte à ajuster un angle de rotation de l'articulation (5a, 5b, 5c, 5d) ou du moteur (10a, 10b, 10c, ...) selon la commande de position reçue,
**caractérisé en ce que** l'articulation (5b ; 5c) est une première articulation et le bras robotisé (1) comprend au moins une seconde articulation (5c ; 5b) ;
dans lequel les première et seconde articulations (5b, 5c) possèdent des axes de rotation parallèles (6b, 6c) au moins pendant la rotation de la première articulation (5b ; 5c) de l'angle de départ vers l'angle final, et le contrôleur (2) est apte à adapter une vitesse de rotation de la seconde articulation (5c ; 5b) à celle de la première articulation (5b ; 5c) de sorte que le couple induit par la gravité auquel la première articulation (5b ; 5c) est soumise reste constant,
dans lequel la seconde articulation (5b) se trouve dans la partie proximale (15c), et le contrôleur (2) est apte à entraîner en rotation la seconde articulation (5b) à la même vitesse mais en sens opposé à la rotation de la première articulation (5c) ; ou
dans lequel la seconde articulation (5c) se trouve dans la partie distale (14b), et le contrôleur (2) est apte à entraîner en rotation la seconde articulation (5c) en sens opposé à la rotation de la première articulation (5b), et à commander la vitesse de rotation de la seconde articulation (5c) de manière à maintenir constant un décalage latéral (d) entre le centre de gravité (16b) de la partie distale (14b) et l'axe (6b) de la première articulation (5b).

7. Système robotique selon la revendication 6, dans lequel le capteur (18b, 18c) est un capteur d'angle associé à un arbre de sortie de l'engrenage de transmission (10b, 10c, 10d).

8. Produit logiciel d'ordinateur comprenant une pluralité d'instructions qui, lorsqu'elles sont exécutées par le contrôleur (2) du système robotique selon la revendication 6, amènent le contrôleur à mettre en œuvre au moins les étapes b), c) et d) du procédé selon l'une quelconque des revendications 1 à 5, le mouvement étant choisi de sorte qu'au moins pendant la rotation de la première articulation (5b ; 5c) de l'angle de départ vers l'angle final, les première et seconde articulations (5b, 5c) possèdent des axes de rotation parallèles (6b, 6c), et une vitesse de rotation de la seconde articulation (5c ; 5b) est adaptée à celle de la première articulation (5b ; 5c) de sorte que le couple induit par la gravité auquel la première articulation (5b ; 5c) est soumise reste constant,

dans lequel la seconde articulation (5b) se trouve dans la partie proximale (15c), et la rotation de la seconde articulation (5b) s'effectue à la même vitesse mais en sens opposé à la rotation de la première articulation (5c) ; ou
dans lequel la seconde articulation (5c) se trouve dans la partie distale (14b), la rotation de la seconde articulation (5c) est en sens opposé à la rotation de la première articulation (5b), et la vitesse de rotation de la seconde articulation (5c) est commandée de manière à maintenir constant un décalage latéral (d) entre le centre de gravité (16b) de la partie distale (14b) et l'axe (6b) de la première articulation (5b).

# Fig. 1

# Fig. 2

# Fig. 3

# Fig. 4

# Fig. 5

# Fig. 6

EP 4 526 088 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015006705 A

- US 2020180153 A1